Europäisches Patentamt

European Patent Office

Office européen des brevets

(19)

(11) EP 0 924 841 A1

(12) EUROPEAN PATENT APPLICATION

published in accordance with Art. 158(3) EPC

(43) Date of publication:
23.06.1999 Bulletin 1999/25

(21) Application number: 97924264.1

(22) Date of filing: 28.05.1997

(51) Int. Cl.$^6$: H02K 19/22

(86) International application number:
PCT/JP97/01839

(87) International publication number:
WO 98/40959 (17.09.1998 Gazette 1998/37)

(84) Designated Contracting States:
DE FR GB

(30) Priority: 13.03.1997 JP 5943697

(71) Applicant: DENSO CORPORATION
Kariya-City Aichi-Pref. 448 (JP)

(72) Inventor: TANIGUGHI, Makoto
Kariya-City Aichi-Pref 448 (JP)

(74) Representative:
R.A. KUHNEN & P.A. WACKER
Patentanwaltsgesellschaft mbH
Alois-Steinecker-Strasse 22
85354 Freising (DE)

(54) AC POWER GENERATING SYSTEM FOR VEHICLE

(57) An alternator system according to the present invention can decrease rapidly G-surge voltage appearing when a B-terminal as an output terminal is disconnected. On a rotor 20 constituting a magnetic field, permanent magnets 28 as a second magnetic flux source are disposed in addition to a field coil 24 as a first magnetic flux source. The permanent magnets 28 supply magnetic flux in a direction opposite to magnetic flux supplied by the field coil 24, and an amount of magnetic flux supplied by the permanent magnets 28 is substantially equal to an amount of magnetic flux supplied by the field coil 24. Accordingly, a cross-sectional area of the magnetic circuit in the rotor can be made smaller, and an inductance of the field coil 24 can be made lower. The G-surge voltage can be decreased rapidly because magnetic flux linking with the field coil 24 is rapidly attenuated by the magnetic flux from the permanent magnets 28.

FIG. 1

EP 0 924 841 A1

## Description

### TECHNICAL FIELD

The present invention relates to an alternating current generating system for a vehicle with an alternator.

### BACKGROUND ART

Generally, an alternating current generator (hereinafter called an alternator), constituting an alternating current generating system for use in a vehicle, is mounted on an engine with a mounting member such as a bracket. Therefore, various vibrating forces are imposed on the alternator from the engine, and thereby bolts and nuts fastening the alternator to the engine may be loosened. Especially, a nut (B-terminal nut) for fastening a heavy buttery wire harness (B-harness) is much affected by vibration and may be loosened.

In case the B-terminal is loosened, sparks will occur at the terminal because of defective contact, and a high surge voltage will be generated at the same time. If the B-harness is completely disconnected from the B-terminal, an output voltage of the alternator will surge to a very high voltage such as several-ten times of a rated voltage which is called a no-load-saturated voltage. In this case, current supplied to a field coil is cut off immediately by cutting off a power transistor connected in series with the field coil by operation of a voltage regulator. At this instance, an abnormally high voltage appearing at the output terminal of the alternator is imposed on the power transistor through the field coil. The power transistor may be broken by the high voltage because the power transistor cannot endure such a high voltage.

To protect the power transistor from the high voltage, a recurrent diode for circulating the field current therethrough is usually connected in parallel with the field coil, with its cathode connected to the B-terminal side. The field current is gradually attenuated in the parallel circuit with a time constant of L/R ( L is an inductance and R is a resistance of the field coil). During the attenuating period, the alternator continues to generate a no-load voltage according to an amount of the field current. As the field current decreases with the time constant L/R, the no-load voltage also decreases with the same time constant. The surge voltage observed under this situation is called a G-surge.

To avoid any damages of components caused by the G-surge, various proposals have been made. For example, a condenser or a Zener diode is connected between the B-terminal and the ground to absorb G-surge energy. However, capacity of the condenser or the Zener diode has to be large to absorb a considerably high G-surge energy, which makes the system large and expensive compared with a relatively low possibility of occurrence of the G-surge. It is also taught in JP-A-5-260678 to use Zener diodes in a rectifier for rectifying alternating current into direct current. In this case, too, there is a drawback that the rectifier itself may be broken down by the G-surge energy in case a duration of G-surge is long, because the G-surge energy has to be consumed in the Zener diodes. Another example disclosed in USP 5,187,426 uses a device to reverse a polarity of the field current immediately upon occurrence of the G-surge to quickly eliminate residual magnetic flux in the magnetic field. This device, however, makes the system complex because a circuit for reversing the field current is required.

### DISCLOSURE OF THE INVENTION

In view of the problems mentioned above, an object of the present invention is to shorten the duration of the voltage surge, effectively in a simple device, which occurs in such a case as the B-terminal is disconnected. An object of the present invention is to shorten the duration of the voltage surge simply without using any additional circuits or controls for this purpose. An object of the present invention is to provide an alternator or an alternating current generating system for a vehicle which is able to attain the object mentioned above.

An alternator system claimed in claim 1 has a second magnetic flux source for supplying magnetic flux to a field in a direction opposite to magnetic flux generated by a field coil, and a cross-sectional area of a field magnetic circuit is made less than or not to exceed a cross-sectional area of an armature magnetic circuit to lower an inductance of the field coil without changing a winding of the field coil. Therefore, transient magnetic flux generated by the field coil upon shutting-off a semiconductor switch which controls field current can be attenuated rapidly by supplying the magnetic flux of the second source in an opposite direction to the magnetic flux of the field coil. Further, the duration of the G-surge can be easily shortened because a time constant for the G-surge becomes short.

An alternator system claimed in claim 2 is equipped with the second magnetic flux source which is capable of supplying magnetic flux, during a shutting-off period of the semiconductor switch, an amount of which is substantially equal to an amount of magnetic flux supplied by the field coil as the first magnetic flux source during a conductive period of the semiconductor switch. Therefore, the duration of the G-surge can be shortened while attaining a maximum power generation.

An alternator system claimed in claim 3 has permanent magnets as the second magnetic flux source. Therefore, the second magnetic flux source can be made durable and reliable.

## BRIEF DESCRIPTION OF THE DRAWINGS

FIG. 1 is a partial cross-sectional view showing a main portion of an example of an alternator to which the present invention is applied;
FIG. 2 is an example of an electric circuit in the present invention;
FIG. 3 is a cross-sectional view showing a model for explaining magnetic flux;
FIG. 4 is a cross-sectional view showing a model for explaining magnetic flux;
FIG. 5 is a cross-sectional view showing a model for explaining magnetic flux;
FIG. 6 is a cross-sectional view showing a model for explaining magnetic flux;
FIG. 7 is a graph showing an attenuation characteristic of a surge voltage;
FIG. 8 is a fragmentary perspective view showing an armature core; and
FIG. 9 is a drawing showing a magnetic flux path in a pole core.

## BEST MODE FOR CARRYING OUT THE INVENTION

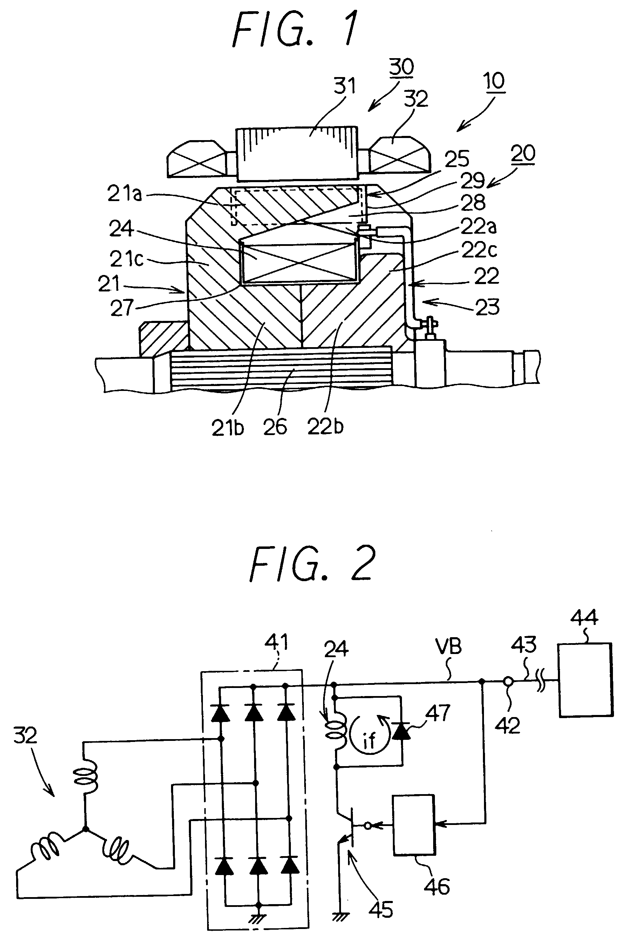

An alternator system to which the present invention is applied will be described below, referring to drawings. FIG. 1 is a cross-sectional view showing a rotor and an armature which are main components of the alternator system. The alternator 10 includes a frame which is not shown in the drawing, a rotor 20 which is rotatably supported by the frame and driven by an engine, and an armature 30 mounted in the frame so that the armature encircles an outer surface of the rotor 20.

The rotor 20 is composed of a Lundell-type core 23 constituted by a pair of pole cores 21 and 22; a field coil 24, disposed on the core 23, as a first source of magnetic field; and a magnet member 25 as a second source of magnetic field. The pair of pole cores 21 and 22 are press-fitted on the shaft 26. Each of the pole cores 21 and 22 has claws 21a or 22a as magnetic poles extending in an axial direction, a boss 21b or 22b as a magnetic path, and a disc portion 21c or 22c as a magnetic path connecting the boss and the claws. The field coil 24 is wound on a bobbin 27 and held on the bosses 21b and 22b. The magnet member 25 is composed of a plurality of permanent magnets 28 disposed in each space between the claws 21a and 22a, and a magnet holder 29 serving to connect each permanent magnet 28 into a single chain and enabling to handle connected magnets as a whole when they are assembled to the pole cores. The permanent magnets 28 are magnetized so that their magnetic flux direction becomes opposite to a magnetic flux direction of the field coil 24. That is, the magnetic flux of the permanent magnets 28 inversely biases the magnetic flux of the field coil 24. An amount of the total magnetic flux supplied by the permanent magnets 28 is equivalent to that supplied by the field coil 24 during a period a power transistor 45, which will be described later, is conductive. The permanent magnets 28, as the second source of magnetic flux, supply a constant amount of magnetic flux in the opposite direction to the main flux supplied by the field coil 24 in the rotor magnetic circuit, all the time including a period during which the power transistor 45 is conductive, a period during which the power transistor is non-conductive, and a transient period after the power transistor has been shut off.

The armature 30 is composed of an armature core 31 and an armature coil 32 which is wound on the armature core with a three-phase connection.

FIG. 2 shows an electric circuit of the alternator system. Output terminals of the armature coil 32 having a Y-connection are connected to a rectifier bridge 41 constituted by diodes, and three-phase alternating current generated in the armature coil 32 is converted into direct current output by the rectifier bridge 41. A positive terminal of the rectifier bridge 41 is connected to a B-terminal 42 and further to electric loads 44 including a battery through a power source wire 43 of a vehicle, while a negative terminal of the rectifier 41 is grounded. A power transistor 45, a semiconductor switching element, for controlling the field current is connected between the field coil 24 and the ground. A control circuit 46 turns on and off the power transistor 45 according to the output voltage VB of the alternator. A recurrent diode 47 is connected in parallel with the field coil 24 with its cathode connected to the positive terminal of the rectifier.

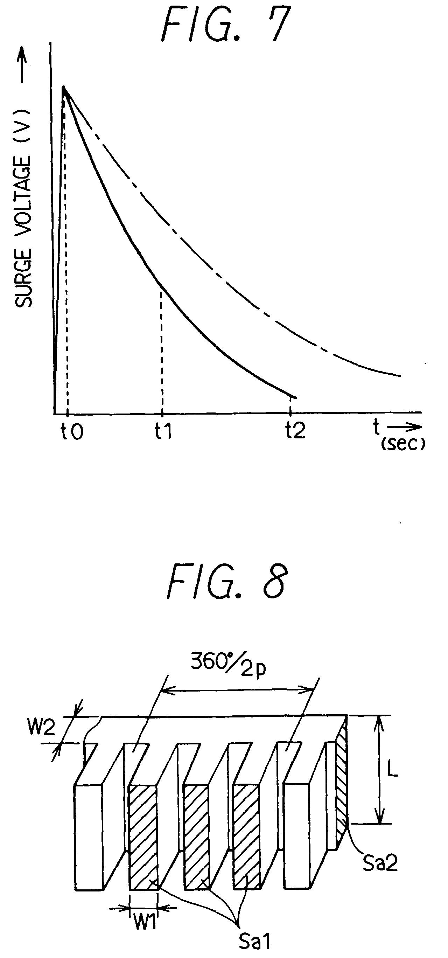

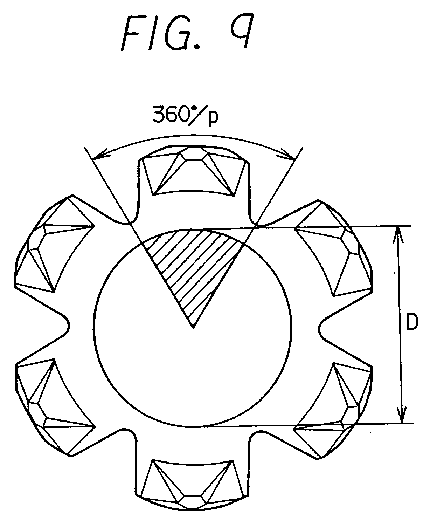

FIGS. 8 and 9 are drawings for explaining a relation between a cross-sectional area of a magnetic flux path in the armature 31 and that in the rotor 20. Referring to FIG. 8 the cross-sectional area of the magnetic flux path in the armature 31 will be explained. The cross-sectional area "Sa" of the magnetic flux path in the armature means a cross-sectional area in which the main flux flows in a closed magnetic circuit formed by a pair of poles. Generally, the cross-sectional area "Sa" is equal to a sum "Sa1" of cross-sectional areas of teeth included in an angle $(360° / 2P)$, where 2P is the number of poles of a generator. In the structure shown in FIG. 8, "Sa" may be also equal to two times of a cross-sectional area "Sa2" which is a cross-sectional area of a core back connecting the teeth, because cross-sectional areas "Sa1" and "Sa2" are generally designed with a certain relation to optimize a magnetic flux flow. In this particular embodiment shown here, the cross-sectional areas in the armature are designed so that "Sa1" is nearly equal to $2 \times$ "Sa2". In this embodiment shown in FIG. 8, three teeth are included in the angle of $(360° / 2P)$, and accordingly, "Sa1" and "Sa2" are expressed as follows:

$$\text{"Sa1"} = 3 \times W1 \times L, \text{ "Sa2"} = W2 \times L,$$

where L is a thickness of the armature in the axial direction, W1 is a width of the tooth, and W2 is a thickness of the core back.

Referring to FIG. 9, a cross-sectional area "Sb" of a magnetic flux path in the rotor boss (21b and 22b) will be explained. The cross-sectional area "Sb" represents a cross-sectional area corresponding to a pair of the rotor poles, and is expressed as follow:

$$\text{"Sb"} = \Pi D^2/4 \times 1/P,$$

where D is a diameter of the boss as shown in FIG. 9, and P is the number of the rotor pole pairs. In the particular embodiment shown here, the cross sectional area "Sb" is designed to be smaller than the cross sectional area "Sa", that is:

$$\text{"Sb"} \le \text{"Sa"} = \text{"Sa1"} \approx 2 \times \text{"Sa2"}$$

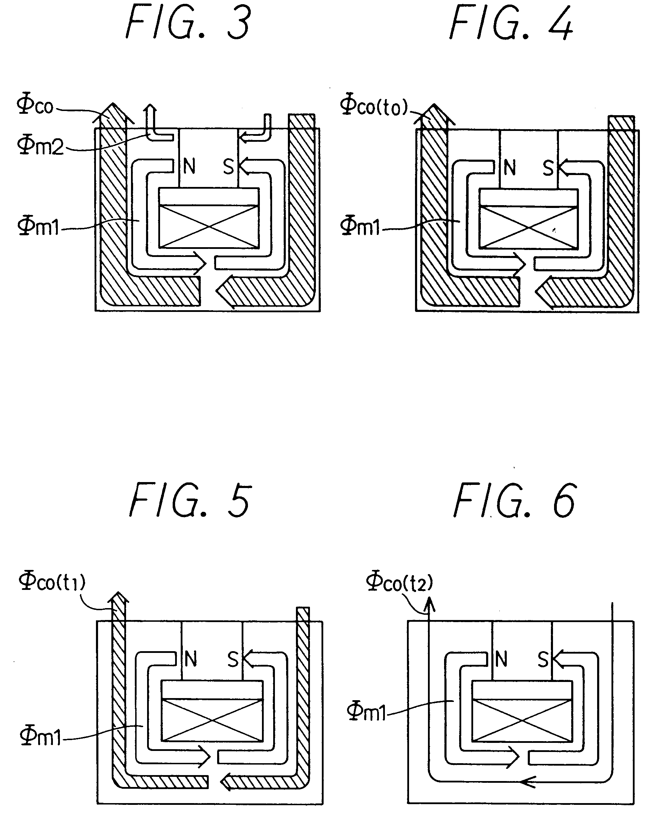

Referring to FIGS. 3 ~ 7, operation and advantages of the present embodiment will be described. FIGS. 3 ~ 6 are models showing an amount of magnetic flux flowing in the rotor core, in which structural details are eliminated. FIG. 3 shows magnetic flux in the rotor core when excitation current is flowing in the field coil 24, generating a normal output. As mentioned above, the permanent magnets 28 are disposed in spaces between rotor claws 21a and 22a so that the permanent magnets inversely bias main magnetic potential generated by the field coil 24. Of the magnetic flux of the permanent magnets 28, its most portion $\Phi m1$ flows, linking with the field coil 24, through the inside of the rotor magnetic path in the opposite direction to the main flux $\Phi co$ generated by the field coil 24, and its other portion $\Phi m2$ links with the armature 30. However, the magnetic circuit is designed so that the alternator does not generate an output voltage exceeding a battery voltage with the flux $\Phi m2$ alone even when the rotor 20 rotates at its maximum speed. A net magnetic flux flowing in the rotor magnetic circuit including disc portions 21c and 22c and bosses 21b and 22b becomes smaller than the flux $\Phi co$ when excitation current is flowing in the field coil 24. That is, the net flux is: $\Phi co - \Phi m1$. Therefore, the cross-sectional area of the rotor magnetic circuit can be reduced, compared with the case where permanent magnets are not used. That is, an inductance L of the field coil 24 can be made smaller without changing the field coil winding. On the other hand, the cross-sectional area of the armature magnetic circuit has to be enlarged, compared with that in the case where permanent magnets are not used, to accommodate the increased magnetic flux: $\Phi co + \Phi m2$.

Next, phenomenon after the G-surge has occurred will be described. The recurrent diode 47 is connected in parallel with the field coil 24 to protect the power transistor 45 as mentioned above. Generally, the output voltage reaches a high no-load saturated voltage which is several-ten times of the rated voltage at an instance when the G-surge occurs. At this instance, the power transistor 45 is shut off by operation of the control circuit 46 detecting the G-surge voltage, and the field current having flown in the field coil 24 begins to flow in the parallel circuit of field coil 24 and the recurrent diode 47 as a circulating current $i_f$ as shown in FIG. 2. The amount of the circulating current $i_f$ decreases with a time constant L/R ( L is an inductance and R is a resistance of the field coil 24). Accordingly, the magnetic flux $\Phi co$ generated by the field coil decreases with the time constant L/R, and the no-load saturated voltage appearing at the output terminal 42 also decreases with the same time constant. In other words, the circulating current $i_f$, the magnetic flux $\Phi co$ generated by the circulating current and the output voltage VB decrease exponentially with the same time constant L/R.

At the instance the power transistor 45 is shut off (at $t = t_0$), the flux $\Phi co(t_0)$ and the flux $\Phi m1$ of the permanent magnets having an opposite direction co-exist in the rotor magnetic circuit as shown in FIG. 4. The flux $\Phi co(t_0)$ is the same as flux to be generated in a rotor having no permanent magnet, and larger than the flux $\Phi m1$. Thereafter, the flux $\Phi co(t_0)$ decreases rapidly because there is the constant flux $\Phi m1$ in the opposite direction. FIG. 5 shows a situation where the flux $\Phi co(t_0)$ has decreased to a value $\Phi co(t_1)$ which is almost equal to the value of $\Phi m1$ at time $t_1$. The flux $\Phi co(t_1)$ further decreases to a value $\Phi co(t_2)$ which is almost equal to zero at time $t_2$ as shown in FIG. 6.

The G-surge voltage change according to the magnetic flux decrease is shown in graph of FIG. 7, where the abscissa is time in second counting from the instance the power transistor is shut off and the ordinate is the G-surge voltage in volt. In this graph, a surge voltage attenuation curve in a conventional alternator system having no permanent magnet is shown with a dotted line, and the same in the present embodiment is shown with a solid line. As seen from the graph, the attenuation characteristic is much improved in the present embodiment. That is, the attenuation characteristic is greatly improved by using permanent magnets generating the magnetic flux inversely biasing the main flux, and decreasing the inductance L of the field coil 24 by narrowing the cross-sectional area of the rotor magnetic circuit.

Though the permanent magnets 28 disposed in the spaces between the pole core claws are used as a second magnetic flux source in the embodiment described above, an electric magnet may be used in place of the permanent magnets. Also, ferrite magnets or rare-earth magnets may be used as the permanent magnets which serve as the second magnetic flux source.

## INDUSTRIAL APPLICABILITY

In the alternator system according to the present invention, permanent magnets as the second magnetic flux source supplying magnetic flux in an opposite direction, in the boss of the rotor, to magnetic flux of the field coil causing a G-surge are disposed, and further the cross-sectional area "Sb" of the rotor magnetic circuit is made smaller than both cross-sectional areas "Sa1" and 2 × "Sa2" of the armature magnetic circuit. Therefore, the duration of G-surge can be shortened, and accordingly durability and reliability of the alternator system can be enhanced.

**Claims**

1. An alternator system for use in a vehicle comprising:

   an armature having an armature coil;
   a field, rotatable relative to said armature, having a plurality of magnetic poles;
   a field coil as a first magnetic flux source for supplying magnetic flux to said magnetic poles of said field;
   a diode connected in parallel to said field coil;
   a semiconductor switch, connected in series to said field coil, for controlling current supply to said field coil; and
   a control circuit for controlling said semiconductor switch, characterized in that:
   the system further comprises a second magnetic flux source for supplying magnetic flux, having an opposite direction to the magnetic flux of said field coil, to the magnetic circuit of said field so that said magnetic flux of the second magnetic flux source links with said field coil during a shutting-off period of said semiconductor switch; and
   a cross-sectional area "Sb", per a pair of poles, of the magnetic circuit of said field is made less than or equal to a cross-sectional area "Sa", per a pair of poles, of the magnetic circuit of said armature.

2. An alternator system according to claim 1, further characterized in that an amount of magnetic flux supplied from said second magnetic flux source to said field during the shutting-off period of said semiconductor switch is substantially equal to an amount of magnetic flux supplied from said field coil as the first magnetic flux source during a conductive period of said semiconductor switch.

3. An alternator system according to claim 1 or 2, further characterized in that said second magnetic flux source is permanent magnets disposed in spaces between poles of said field so that the permanent magnets supply magnetic flux having an opposite direction to the magnetic flux supplied from said field coil.

# FIG. 1

# FIG. 2

# FIG. 3

$\Phi$co

$\Phi$m2

$\Phi$m1

N S

# FIG. 4

$\Phi$co(to)

$\Phi$m1

N S

# FIG. 5

$\Phi$co(t₁)

$\Phi$m1

N S

# FIG. 6

$\Phi$co(t₂)

$\Phi$m1

N S

# FIG. 7

# FIG. 8

# FIG. 9

## INTERNATIONAL SEARCH REPORT

| International application No. |
| --- |
| PCT/JP97/03789 |

| A. CLASSIFICATION OF SUBJECT MATTER |
| --- |
| Int. Cl$^6$ H02K9/06 |

According to International Patent Classification (IPC) or to both national classification and IPC

| B. FIELDS SEARCHED |
| --- |

Minimum documentation searched (classification system followed by classification symbols)

Int. Cl$^6$ H02K9/00-9/28

Documentation searched other than minimum documentation to the extent that such documents are included in the fields searched

| Jitsuyo Shinan Koho | 1940 – 1997 |
| --- | --- |
| Kokai Jitsuyo Shinan Koho | 1971 – 1997 |
| Toroku Jitsuyo Shinan Koho | 1994 – 1997 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| A | JP, 1-27406, Y2 (Nippondenso Co., Ltd.), August 16, 1989 (16. 08. 89)(Family: none) | 1 |
| A | JP, 63-59744, A (Mitsuba Electric Mfg. Co., Ltd.), March 15, 1988 (15. 03. 88) & GB, 8720251, A0 & DE, 3728839, A1 & FR, 2603429, A1 & GB, 2196189, A1 & US, 4908541, A & GB, 2196189, B2 & DE, 3728839, C2 | 1 |
| A | JP, 4-24939, B2 (Nippondenso Co., Ltd.), April 28, 1992 (28. 04. 92)(Family: none) | 1 |
| A | JP, 55-147941, A (Mitsubishi Electric Corp.), November 18, 1980 (18. 11. 80)(Family: none) | 1 |

☐ Further documents are listed in the continuation of Box C.  ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| November 21, 1997 (21. 11. 97) | December 9, 1997 (09. 12. 97) |

| Name and mailing address of the ISA/ | Authorized officer |
| --- | --- |
| Japanese Patent Office | |
| Facsimile No. | Telephone No. |

Form PCT/ISA/210 (second sheet) (July 1992)